**Europäisches Patentamt**

**European Patent Office**

**Office européen des brevets**

(11) Veröffentlichungsnummer: **0 085 878**
**B1**

(12) **EUROPÄISCHE PATENTSCHRIFT**

(45) Veröffentlichungstag der Patentschrift:
09.04.86

(51) Int. Cl.⁴: **B 01 D 37/04,** B 01 D 29/30,
D 21 D 5/00

(21) Anmeldenummer: 83100589.7

(22) Anmeldetag: 24.01.83

(54) Verfahren zum Regeln eines kontinulerlich arbeitenden Druckfilters.

(30) Priorität: 09.02.82 CH 774/82

(43) Veröffentlichungstag der Anmeldung:
17.08.83 Patentblatt 83/33

(45) Bekanntmachung des Hinweises auf die Patenterteilung:
09.04.86 Patentblatt 86/15

(84) Benannte Vertragsstaaten:
AT BE DE FR GB IT LU NL SE

(56) Entgegenhaltungen:
EP - A - 0 038 643
DE - A - 2 558 682
DE - B - 2 459 587
FR - A - 1 601 097
US - A - 3 523 077
US - A - 4 042 503

(73) Patentinhaber: Sulzer - Escher Wyss AG,
Hardstrasse 319, CH-8023 Zürich (CH)

(72) Erfinder: Lieberherr, Jürg, In der Gand 31,
CH-8126 Zumikon (CH)
Erfinder: Rebsamen, Ernst, Dorfstrasse 18,
CH-8800 Thalwil (CH)
Erfinder: Trachsel, Felix, Breite 6, CH-5200 Windisch
(CH)
Erfinder: Huser, Ludwig, Bremgartenstrasse 31,
CH-5443 Niederrohrdorf (CH)

(74) Vertreter: Kubr, Václav, Dr. et al, c/o Sulzer - Escher
Wyss AG Patentabteilung Postfach, CH-8023 Zürich (CH)

## Beschreibung

Die Erfindung betrifft ein Verfahren zum Regeln eines kontinuierlich arbeitenden Druckfilters beim Einführen eines Suspensionsstromes in dessen Filtrationskammer, beim Abführen eines Filtratstromes und eines Produktstromes aus der Kammer und beim Unterhalten eines konstanten, tolerierten Betriebsdruckes in der Kammer, wobei das Durchlassvermögen der Filtrationswände der Filtrationskammer mit der fortlaufenden Betriebszeit des Druckfilters allmählich abnimmt.

Solche Druckfilter sind z.B. aus der USA-Patentschrift Nr. 3 797 662, bzw. der deutschen Offenlegungsschrift Nr. 20 54 968 und aus der USA-Patentschrift Nr. 4 066 554, bzw. der deutschen Patentschrift Nr. 25 58 682 bekannt.

Diese Druckfilter weisen eine ringförmige Filtrationskammer auf, welche von walzenförmigen Filtrationswänden begrenzt ist. Die Filtrationswände sind relativ zueinander rotierbar, was zur Bildung einer Wirbelung der zu trennenden Suspension in der Filtrationskammer führt, so dass ein gewisser Selbstreinigungseffekt an den Filtrationswänden erreicht wird. So bildet sich ein Feststoffkuchen nur an den Filtrationsflächen langsamer als bei anderen Druckfiltern. Aber auch bei diesen Druckfiltern sinkt mit wachsender Feststoffkuchenschicht das Durchlassvermögen der Filtrationswände mit der fortlaufenden Betriebszeit stetig.

Bei der Trennung einer Suspension in ein Filtrat und in ein Produkt, d.h. in eine eingedickte Suspension, wird eine konstante Qualität des Produktes während der Betriebszeit verlangt. Das heisst, es wird ein konstantes Verhältnis zwischen dem Anteil der Trockensubstanz und dem Anteil der Flüssigkeit in dem Produkt verlangt.

Dieses Postulat bleibt bis heute bei den üblichen Regulierungsmethoden unerfüllt. Es wird eine konstante Menge Suspension pro Zeiteinheit, ein konstanter Suspensionsstrom von konstanter Qualität, d.h. mit konstantem Verhältnis zwischen der Trockensubstanzmenge und der Flüssigkeitsmenge in einen Druckfilter eingeführt. In der Filtrationskammer wird ein konstanter Betriebsdruck durch Drosselung des Produktausflusses gehalten. Bei dem stetig absinkenden Durchlassvermögen der Filtrationswände wird durch die Filtrationswände eine stetig kleinere Menge des abzutrennenden Filtrats abgeführt, so dass eine stetig grössere Menge der Flüssigkeit in der Filtrationskammer verbleibt und als ein Anteil des Produkts mit diesem abgeführt wird. Dies bedeutet, dass das Produkt stetig dünner wird bei einem sich stetig verschlechternden Verhältnis zwischen dem Trockensubstanzanteil und dem Flüssigkeitsanteil zu Gunsten des letzteren. Die stetig sich verschlechternde Qualität des Produkts wird beim heutigen Verfahren bis zu einem gewissen Grad toleriert. Beim Erreichen der Toleranzgrenze wird der Betrieb eingestellt und die Durchlässigkeit der Filtrationswände, z.B. mittels Durchspülens wieder hergestellt und ein Betrieb erneut aufgenommen.

Der Erfindung liegt die Aufgabe zugrunde, ein Regelungsverfahren für einen Druckfilter zu finden, bei welchem die Produktqualität, also das Verhältnis zwischen dem Trockensubstanzanteil und dem Flüssigkeitsanteil im Produkt über die ganze Betriebszeit konstant bleibt.

Diese Aufgabe ist beim Regeln eines kontinuierlich arbeitenden Druckfilters der anfangs beschriebenen Art erfindungsgemäss dadurch gelöst, dass der Suspensionsstrom und der Produktstrom während des Betriebs nach Ergebnis eines Messens des Durchlassvermögens der Wände reguliert werden, so dass bei jedem Feststellen einer Abnahme des Durchlassvermögens jeder der beiden Ströme um einen gleichen Koeffizient reduziert wird, der zu der je weils festgestellten Abnahme direkt proportional ist, wodurch ein gewünschtes und anfangs des Betriebes vorhandenes Verhältnis zwischen dem Suspensionsstrom und dem Produktstrom während des Betriebes konstant unterhalten wird und konstant bleibt.

Nach diesem Verfahren wird in den Druckfilter ein so grosser Suspensionsstrom eingeführt, dass er bei dem momentan gegebenen Durchlassvermögenund der Leistungsfähigkeit der Filtrationswände in der gewünschten, ursprünglichen Proportion verarbeitet werden kann. Das gewünschte konstante Verhältnis zwischen dem Trockensubstanzanteil und dem Flüssigkeitsanteil im Produkt ist dadurch erreicht und bleibt über die ganze Betriebszeit erhalten.

Vorteilhafterweise verfährt man dabei so, dass das Durchlassvermögen der Filtrationswände mittels Messens der Grösse des durch die Wände durchgelassenen Filtratstromes gemessen wird, dessen Abnahme, bei dem Unterhalten des konstanten Verhältnisses zwischen dem Suspensionsund dem Produktstrom und des konstanten Betriebsdruckes, die Abnahme des Durchlassvermögens der Wände bedeutet, oder auch vorteilhafterweise so, dass das Durchlassvermögen der Filtrationswände mittels Messens der Grösse des tolerierten Betriebsdruckes in der Filtrationskammer gemessen wird, dessen Zunahme, bei dem Unterhalten des konstanten Verhältnisses zwischen dem Suspensions- und dem Produktstrom, die Abnahme des Durchlassvermögens der Filtrationswände bedeutet.

Es ist auch möglich und vorteilhaft, dass die eine Stellgrösse zum Reduzieren der beiden Ströme gemäss der gemessenen Abnahme des Durchlassvermögens der Filtrationswände sowohl vom Ergebnis eines Messens des Filtratsstromes wie auch vom Ergebnis eines Messens des tolerierten Betriebsdruckes abgeleitet wird.

Beim Ausführen des Verfahrens ist es vorteilhaft, wenn das Einführen der Suspension und das Abführen des Produkts volumenmetrisch zwangsläufig mittels regulierbarer Dosierpumpen erfolgt, wobei die Förderleistung der Pumpen gemäss der gemessenen Abnahme des Durchlassvermögens der Filtrationswände (2 und 3) geregelt wird.

Zur Vereinfachung des Regelns führt die Massnahme, dass als Dosierpumpen zweifach regulierbare Dosierpumpen eingesetzt werden, die über Verändern ihres Dosierraumes und über Verändern ihrer Drehzahl regulierbar sind, und dass diese Dosierpumpen an einen drehzahlregulierbaren Antriebsmotors angekuppelt werden, so dass die Regulierung ihrer Drehzahl gemeinsam über Regulierung der Drehzahl des gemeinsamen Antriebsmotors erfolgt, wobei das konstant zu haltende Verhältnis zwischen dem Suspensions- und dem Produktstrom durch Einstellen der Dosierräume hergestellt wird.

Im weiteren wird das erfindungsgemäss Verfahren und seine Vorteile näher beschrieben und erklärt. Die nachstehenden Ausführungen beziehen sich auf eine anliegende Zeichnung, in welcher zeigt:

Fig. 1 ein Schema eines Druckfilters mit einem Regulierungsaggregat zum Ausführen des Verfahrens;

Fig. 2 ein Diagramm zum Erklären eines Verfahrens der bisher bekannten Art;

Fig. 3 ein Diagramm zum Erklären eines Ausführungsbeispiels nach dem erfindungsgemässen Verfahren, und

Fig. 4 ein Diagramm zum Erklären der Unterschiede zwischen dem herkömmlichen und dem erfindungsgemässen Verfahren.

Ein Druckfilter bekannter Art weist ein Gehäuse 1 auf, in dem zwei walzenförmige, zueinander rotierbare Filtrationsflächen 2 und 3 eine ringförmige Filtrationskammer 4 begrenzen. Die innere Filtrationsfläche 3 ist mittels eines Motors 5 rotierbar. Eine zu trennende Suspension in einer konstanten Qualität, also mit einem konstanten Verhältnis zwischen einem Trockensubstanzanteil und einem Flüssigkeitsanteil, wird in die Filtrationskammer 4 durch eine Leitung 6 in einen Suspensionsstrom E eingeführt. Dieser Suspensionsstrom wird volumenmetrisch von einer regulierbarten Dosierpumpe 7 geliefert, die von einem Antriebsmotor 8 angetrieben wird. Ein abzutrennendes Filtrat dringt durch die Filtrationsflächen 2 und 3 und wird gesammelt und abgeführt durch Filtratsleitungen 9 und 10. Zum Messen des Filtratsstromes F ist eine volumenmetrische Messvorrichtung 11 an die Leitungen 9 und 10 angeschlossen. Zum Messen des Betriebsdruckes in der Filtrationskammer 4 ist ein Druckmesser 29 vorgesehen. Ein Produkt, die eingedickte Suspension, wird über eine Produktleitung 12 in einem Produktstrom A aus der Filtrationskammer 4 abgeführt. Der Produktstrom A wird volumenmetrisch von einer Dosierpumpe 13 bestimmt und reguliert. Eine Waschflüssigkeit wird in die Filtrationskammer 4 zum Waschen des Produkts durch eine Leitung 14 volumenmetrisch bestimmt und geregelt von einer Dosierpumpe 15, in einem Waschflüssigkeitsstrom W geliefert. Alle drei Dosierpumpen 7,15 und 13 sind an die Welle 16 des Antriebsmotors 8 angekuppelt, alle drei werden von diesem gemeinsam angetrieben.

Die drei Dosierpumpen sind zweifachregulierbare Dosierpumpen, deren Lieferleistung erstens durch Aenderung ihres Dosierraumes, z.B. durch Aenderung des Hubes, und zweitens durch Aendern ihrer Drehzahl regulierbar sind. Ein gewünschtes konstantes Verhältnis zwischen dem einzuführenden Suspensionsstrom $\dot{E}$, dem Waschflüssigkeitsstrom $\dot{W}$ und dem Produktstrom $\dot{A}$, wird an den zweifach regulierbaren Dosierpumpen durch Einstellen des Dosierraumes an den einzelnen Dosierpumpen 7,15 und 13 mittels eines Stellgliedes 7' bzw. 15' bzw. 13' hergestellt. Die jeweils zu liefernde Menge pro Zeiteinheit, der konkrete Strom also, wird durch Einstellen der Drehzahl der Dosierpumpen 7, 15 und 13 hergestellt. Da die allen Dosierpumpen an einer gemeinsamen Welle, der Welle 16 des Antriebsmotors 8 angekuppelt sind, wird der Suspensions-, der Waschflüssigkeits- und der Produktstrom in jeweils gleichbleibendem Verhältnis untereinander durch Regulieren der Drehzahl des Antriebsmotors 8 mittels eines Variometers 17 reguliert. Das Drehzahlregulierungssystem des Antriebsmotors 8 mit einem Variometer 17 ist einem Stellgrössegeber 18 angeschlossen, in welchem die jeweilige Stellgrösse von dem Ergebnis der Messung mit der Messvorrichtung 11 zum Messen des Filtratsstromes $\dot{F}$ abgeleitet wird. Parallel dazu und auf äquivalenter Weise kann, und dies ist in der Zeichnung auch dargestellt, die Stellgrösse für den Variometer 17 von dem Ergebnis des Messens des Betriebsdruckes p in der Filtrationskammer 4 abgeleitet werden. Dazu ist ein Druckmesser 19 der Kammer 4 zugeschaltet und ein Stellgrössegeber 20 hinter ihm und vor dem Variometer 17 vorgesehen.

Bei dem erfindungsgemässen Prinzip des jeweiligen Unterhaltens des konstanten Verhältnisses zwischen dem Suspensionsstrom $\dot{E}$ (plus Waschflüssigkeitsstrom $\dot{W}$) und dem Produktstrom $\dot{A}$ ist es grundsätzlich möglich, mit dem einen oder dem anderen Mess- und Regulierungssystem oder mit einer Kombination der beiden Systeme, wie oben beschrieben, zu arbeiten.

Bei dem Prinzip und bei gleichbleibenden Strömen $\dot{E}$ und $\dot{A}$ manifestiert sich die mit der Zeit auftretende und durch Ansetzen von Feststoffteilchen an den Filtrationswänden verursachte Abnahme des Durchlassvermögens der Filtrationswände 2 und 3 praktisch gleichzeitig durch Absinken des Filtratsstromes $\dot{F}$ und durch Steigen des Druckes p in der Filtrationskammer 4. Das Steigen des Druckes, das innerhalb einer Toleranzzone zulässig sein kann, führt zwangsläufig zum Steigen des Filtratsstromes, das heisst, dass der effektive Filtratsstrom über eine Zeitspanne gleichgross bleiben kann, so dass während dieser Zeitspanne eine Abnahme des Durchlassvermögens der Filtrationswände durch Messen des Filtratsstromes nicht erfassbar ist. Ein Ueberschreiten einer zulässigen oberen Toleranzgrenze des Druckes in der Filtrationskammer birgt jedoch die Gefahr einer Beschädigung des Druckfilters, z.B. der Filtrationswände 2 und 3 durch Ueberdruck. Ein Regulieren der Ströme $\dot{E}$ und $\dot{A}$ nur anhand eines Messens des Filtratsstromes über eine längere Betriebszeit ist also nur bei gut filtrierbaren Suspensionen anwendbar. Auch in diesen Fällen sollte sicherheitshalber dieses Regulierungssystem mit einem Drucküberwachungssystem mindestens mit einem Stopschaltereffekt für den Antrieb der Dosierpumpen 7 und bzw. 15 beim Erreichen einer oberen Toleranzgrenze des zulässigen Betriebsdruckes in der Filtrationskammer 4 kombiniert sein.

Das Messen, bzw. Ueberwachen des Druckes in der Filtrationskammer ist also schlussendlich ausschlaggebend und so kann das Regulieren bzw. Reduzieren der Ströme $\dot{E}$ und $\dot{A}$ nur vom Ergebnis dieses Messens abgeleitet werden, sofern man auf das Messen des effektiven Filtratsstromes $\dot{F}$ verzichten kann oder will.

Das erfindungsgemässe Verfahren liesse sich auch mit einem anderen Regulierungsaggregat verwirklichen. So sind auch einfache, nur über ihre Drehzahl regulierbare Dosierpumpen einsetzbar, deren jede mit eigenem drehzahlregulierbarem Antriebsmotor angetrieben würde. Eine dazu notwendige apparative Regulierungsausstattung braucht nicht eigens beschrieben zu werden. Gegenüber der bereits beschriebenen müsste die Ausstattung z.B. verdreifacht werden.

Es wäre auch möglich, die zwei Dosierpumpen 7 und 15 für die Ströme $\dot{E}$ bzw. $\dot{W}$ einem gemeinsamen Antriebsmotor anzukuppeln und de Produktstrom $\dot{A}$ mit einer regulierbaren Drosselvorrichtung im Sinne der Erfindung zu regulieren. Zum Ueberwachen des durch diese Drosselung erreichten effektiven Produktstromes müsste der Drosselvorrichtung ein Produktstrommessgerät nachgeschaltet werden, dies zur Kontrolle des Stromes und verbunden mit einem auf die Drosselvorrichtung rückwirkenden sekundären Stellgrössegeber. Auch diese Anordnung ist in der Zeichnung als eine regelungstechnisch leicht vorstellbare Alternative nicht angegeben. In den nachfolgenden Ausführungsbeispielen wird das erfindungsgemässe Verfahren vereinfachungshalber als Regeln nur anhand des Messens des effektiven Filtratsstromes $\dot{F}$, wobei der Betriebsdruck p konstant ist, beschrieben.

Mit dem beschriebenen Druckfilter mit dem Regulierungsaggregat wird folgendermassen gearbeitet:

Es wird ein Trennverfahren eingeleitet, in dem anfangs ein Suspensionsstrom $\dot{E}$, ein Waschflüssigkeitsstrom $\dot{W}$ und ein Produktstrom $\dot{A}$ gewünschter Grössen eingestellt werden. Daraus ergibt sich ein Betriebsdruck p in der Filtrationskammer 4 und ein Filtratstrom $\dot{F}$, welcher durch die Filtrationsflächen 2 und 3 durchdringt. Die Anlage arbeitet so, dass der Suspensionsstrom $\dot{E}$ mit dem Waschflüssigkeitsstrom $\dot{W}$, dem abgeführten Produktstrom $\dot{A}$ und dem abgetrennten Filtratstrom $\dot{F}$ gleichen; $\dot{E} + \dot{W} = \dot{A} + \dot{F}$. Dabei ist auch ein gewünschtes Verhältnis zwischen den den eingeführten Strömen $\dot{E} + \dot{W}$ und dem Produktstrom $\dot{A}$, also das $(\dot{E} + \dot{W})/\dot{A}$ vorhanden, welches den Eindickungsgrad des Produktes, seine gewünschte Qualität, ergibt. Der Filtratstrom F wird in der Messvorrichtung 11 kontinuierlich gemessen. Die gemessene Grösse des momentanen Ist-Filtratstromes $\dot{F}'$ wird mit der anfangs vorhandenen Grösse des Filtratstromes $\dot{F}$ als Vergleichsgrösse verglichen. Gleichsinnig proportional zu dieser festgestellten Differenz, d.h. in dem Verhältnis des Ist-Filtratstromes zu dem anfangs vorhandenen Filtratstrom, also im Verhältnis $\dot{F}' / \dot{F}$ werden auch der Suspensionsstrom, der Waschflüssigkeitsstrom und der Produktstrom reduziert. Wenn das Verhältnis $\dot{F}' / \dot{F}$ als ein Koeffizient k, k = $\dot{F}'/\dot{F}$, bezeichnet ist, werden so momentane Ströme $\dot{E}' = \dot{E} \cdot k$, $\dot{W}' = \dot{W} \cdot k$ und $\dot{A}' = \dot{A} \cdot k$ eingestellt. Arbeitete anfangs der Druckfilter nach $\dot{E} + \dot{W} = \dot{A} + \dot{F}$, arbeitet er momentan nach $\dot{E}' + \dot{W}' = \dot{A}' + \dot{F}'$, wobei das Verhältnis $\dot{E}/\dot{A}$ erhalten bleibt, also $\dot{E}/\dot{A} = \dot{E}'/\dot{A}'$. Dieses geschieht kontinuierlich über die Betriebszeit des Druckfilters, so dass die Qualität des Produkts konstant bleibt.

Das proportionale Reduzieren des Suspensionsstromes, des Waschflüssigkeitsstromes und des Produktstromes wird durch Reduzieren der Anfangsdrehzahl N des Antriebsmotors 8 zu einer Drehzahl N' erreicht. in diesem Falle proportional zu dem Koeffizient k, also N' = N $\cdot$ k. Ein Signal dazu wird dem Variometer 17 von dem Stellgrössegeber 18 gegeben, in welchem dieses von dem gemessenen Verhältnis $\dot{F}'/\dot{F}$ abgeleitet wird.

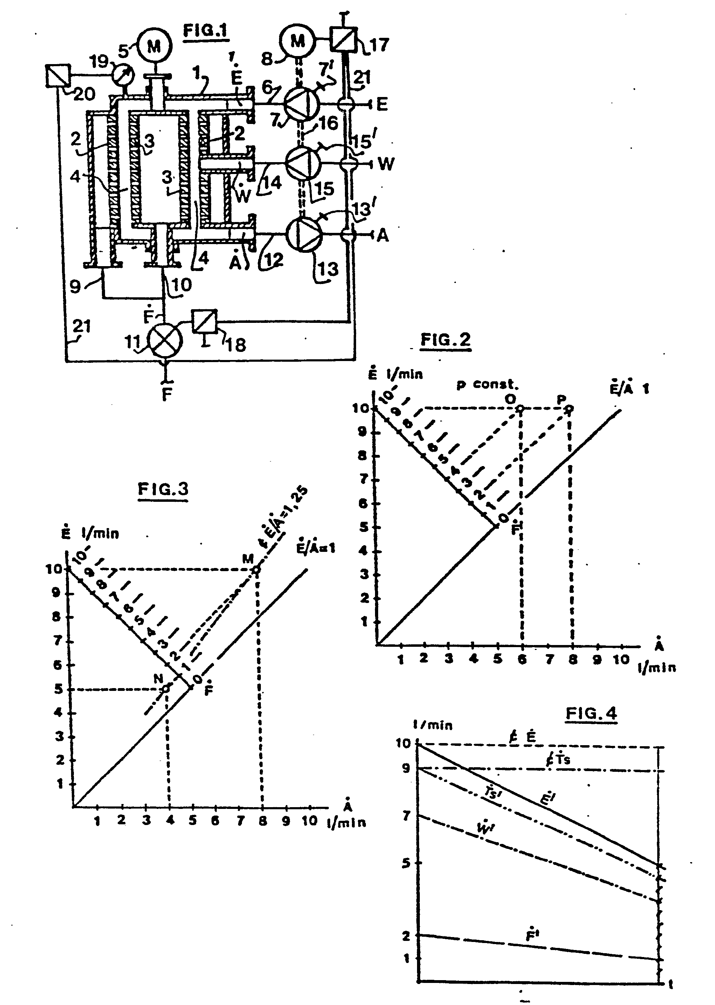

Zum Herausstellen der durch das erfindungsgemäss Verfahren erzielbaren Vorteile wird zuerst anhand eines ersten Beispiels ein bisher übliches Druckfilterregulieren beschrieben: Demnach, wie es mit dem Diagramm in Fig. 2 dargestellt ist, soll eine Suspension durch Abtrennen von 40 % Filtrat eingedickt werden. Dies ist auch anfangs der Fall, wo die Suspension in einem Suspensionsstrom von 10 l/min. eingeführt wird, bei einem Filtratstrom 4 l/min und einem Produktstrom von 6 l/min. Dieser Zustand ist in dem Diagramm mit einem Punkt 0 bebezeichnet. In der Filtrationskammer wird ein konstanter Druck p gehalten, was durch eine Drosselung des Produktstromes erwirkt wird. Durch die sinkende Durchlässigkeit der Filtrationswände sinkt der Filtratstrom, bis er zu 2 l/min absinkt. Es bleiben zusätzliche 2 l/min der Flüssigkeit in der Filtrationskamner, und beim Halten des konstanten Drucks p werden sie mit dem Produktstrom herausgeführt. Um diese 2 l/min wird so das Produkt verdünnt, der Produktstrom ist so auf 8 l/min aufgewachsen, und das Produkt weist nun über 30 % mehr Flüssigkeit auf als anfangs der Fall war. Die Qualität des Produkts verschlechterte sich während des Betriebs ständig, entsprechend dem sich ändernden Verhältnis zwischen dem Suspensionsstrom $\dot{E}$ und dem Produktstrom $\dot{A}$, das $\dot{E} / \dot{A}$, von dem $\dot{E} / \dot{A} = 10 / 6 = 1,66$ zu einem $\dot{E}' / \dot{A}' = 10 / 8 = 1,25$. Dieser Zustand ist in dem Diagramm in der Fig. 2 mit einem Punkt P dargestellt.

In einem anderen Beispiel wird ein Trennprozess erfindungsgemäss reguliert, wobei 20 % Filtrat von einer Suspension abgetrennt werden sollen. Dieser Prozess ist in dem Diagramm gemäss Fig. 3 dargestellt. Anfangs wird ein Suspensionsstrom $\dot{E} = 10$ l/min in den Druckfilter eingeführt. In der Filtrationskammer wird ein konstanter Betriebsdruck $p = ¢$ gehalten, was durch zwangsläufiges volumenmetrisches Einführen der Suspension und durch volumenmetrisches Abführen des Produktes über die Dosierpumpen erwirkt wird.

Dieser Anfangszustand weist einen Filtratstrom $\dot{F} = 2$ l/min , bei einem Suspensionsstrom $\dot{E} = 10$ l/min und einem Produktstrom $\dot{A} = 8$ l/min auf. Der Suspensionsstrom $\dot{E}$ und der Produktstrom $\dot{A}$ sind so in einem gewünschten Verhältnis $\dot{E} / \dot{A} = 10 / 8 = 1,25$. Dieser Zustand ist in dem Diagramm in Fig. 3 mit einem Punkt M bezeichnet. Ein allmählich absinkender Filtratstrom wird kontinuierlich gemessen und nach der festgestellten Differenz zwischen dem anfangs vorhandenen Filtratstrom $\dot{F}$ und dem momentan gemessenen Ist-Filtratstrom $\dot{F}'$, wird gleichsinnig und proportional zu dem Verhältnis zwischen dem anfangs vorhandenen Filtratstrom $\dot{F}$ und dem gemessenen Ist-Filtratstrom $\dot{F}'$, also proportional zu dem Verhältnis $\dot{F}'/\dot{F}$, auch der Suspensionsstrom $\dot{E}$ und der Produktstrom $\dot{A}$ reduziert. Der reduzierte Suspensionsstrom $\dot{E}' = \dot{E} . \dot{F}'/\dot{F}$ und der reduzierte Produktstrom $\dot{A}' = \dot{A} . \dot{F}'/\dot{F}$. sobleibt die ursprünglich gewünschte und anfangs vorhandene Proportion zwischen dem Suspensionsstrom und dem Produktstrom immer die gleiche, das $\dot{E} / \dot{A} = \dot{E}' / \dot{A}'$; in dem gezeigten Beispiel in Fig. 3 gleicht das Verhältnis 1,25. Die Regulierung bewegt sich entlang der Linie, welche in dem Diagramm mit $¢ \dot{E}/\dot{A} = 1,25$ bezeichnet ist. Sinkt der Filtratstrom $\dot{F}'$ von den ursprünglichen 2 l/min auf 1 l/min , also auf die Hälfte des ursprünglichen Filtratstromes, werden auch der Suspensionsstrom $\dot{E}'$ und der Produktstrom $\dot{A}$, jeweils auf eine Hälfte reduziert. Dieser Zustand ist in dem Diagramm in Fig. 3 mit einem Punkt N dargestellt, welcher wie der Punkt M auf der gleichen Linie des konstanten Verhältnisses $¢ \dot{E}/\dot{A} = 1,25$ liegt.

$\dot{E}/\dot{A} = 10/8 = 1,25$ wie $\dot{E}_,/\dot{A}' = 5/4 = 1,25$.Nach Erreichen dieses Zustandes, welcher mit dem Punkt N bezeichnet ist, wird der Trennungsprozess eingestellt und die Durchlässigkeit der Filtrationswände wird z.B. mittels Durchspülens wieder hergestellt. Während der ganzen Betriebszeit, wo sich die Zustände zwischen den Punkten M und N bewegten, war das Produkt immer von einer gleichbleibenden Qualität, was das Verhältnis zwischen dem Trockensubstanzanteil und dem Flüssigkeitsanteil in dem Produkt betrifft. Dieser Vorteil des erfindungsgemässen Regulierungsverfahrens gegenüber dem bisherigen wird noch anhand eines dritten Beispiels herausgestellt, welches in dem Diagramm in Fig. 4 dargestellt ist, in welchem ein Trennungsprozess in einem Zeitablauf gezeigt ist:

In 10 l der zu trennenden Suspension ist 1 l Trockensubstanz und 2 l Waschflüssigkeit enthalten. Davon sollen 20 % Filtrat abgetrennt werden, so dass das Produkt 12,5 % Trockensubstanz und 87,5 % Flüssigkeit enthalten soll. Bei dem Prozess werden anfangs 10 l/min der oben erwähnten Suspension in den Druckfilter eingeführt, wovon 2 l Filtrat abgetrennt werden, so dass das Produkt 8 l beträgt, wovon 1 Liter Trockensubstanz ist. Das Produkt weist also 12,5 % Trockensubstanz und 87,5 % Flüssigkeit auf. Bei dem Trennungsprozess sinkt allmählich der Filtratstrom ab, wie es mit der Linie $\dot{F}'$ in Fig. 4 gezeigt ist, bis er nach einer Zeit t nur 1 l/min beträgt. Dieser allmählich absinkende Filtratstrom $\dot{F}'$ wird kontinuierlich gemessen und in dem gleichen Verhältnis wie der momentane Filtratstrom $\dot{F}'$ zu dem anfangs vorhandenen Filtratstrom $\dot{F}$ abgesunken ist, also in dem Verhältnis $\dot{F}'/\dot{F}$, werden auch der Suspensionsstrom $\dot{E}$, der Waschflüssigkeitsstrom $\dot{W}$ und der Produktstrom $\dot{A}$ reduziert, wie das in Fig. 4 mit den Linien $\dot{E}'$ und $\dot{W}'$ dargestellt ist. Die Begrenzung des Suspensionsstromes bringt mit sich, bei konstantem Anteil Trockensubstanz in der zu trennenden Suspension, auch eine direkt dazu proportionelle Begrenzung der zugeführten Menge der Trockensubstanz, wie es in Fig.4 mit der Linie Ts' gezeigt ist. Nach der Zeit t beträgt der Filtratsstrom $\dot{F}'$ 1 l/min, also nach dem Vergleich mit dem anfangs vorhandenen Filtratstrom $\dot{F}$, $\dot{F}'/\dot{F} = 1/2$, die Hälfte des anfangs vorhandenen Filtratstromes. Dementsprechend sind auch der Suspensionsstrom $\dot{E}'$, der Waschflüssigkeitsstrom $\dot{W}'$ und der Produktstrom $\dot{A}'$ jeweils auf die Hälfte des anfangs vorhandenen Stromes, also auf 5 l/min bzw. 1 l/min , bzw. 4 l/min reduziert. Die Menge der Trockensubstanz beträgt jetzt 0,5 l in jeden 4 l Produkt. Das Produkt ist also in der gleichen Qualität wie anfangs geblieben und weist die ursprünglichen und gewünschten 12,5 % Trockensubstanz und 87,5 % Flüssigkeit auf. Das Verhältnis zwischen dem Suspensionsstrom und dem Produktstrom wurde während des Prozesses konstant gehalten und ist so nach Ablauf der Zeit t das gleiche geblieben: Anfangs-10 / 8 = 1,25, nach der Zeit t - 5/4 = 1,25.

In der Fig. 4 ist auch ein Ablauf eines herkömmlich regulierten Trennverfahrens zum direkten Vergleich mit dem erfindungsgemässen Verfahren eingezeichnet. Dabei kommt es zu einem gleichen Absinken des Filtratstromes, wie es mit der Linie $\hat{F}'$ dargestellt ist. Der Filtratstrom $\hat{F}$ sinkt von den anfangs 2 l/min zu 1 l/min nach Ablauf der Zeit t. Bei diesem herkömmlichen Regulieren wird nur ein Betriebsdruck p konstant gehalten. Das führt dazu, dass dem absinkenden Filtratstrom entsprechend sich der Produktstrom vergrössert und dass in dem Produktstrom sich auch ständig der Flüssigkeitsanteil vergrössert, so dass das Produkt immer dünner wird. War anfangs bei einem Suspensionsstrom, mit dem Waschflüssigkeitsstrom zusammengerechnet, 10 l/min der Produktstrom 8 l/min mit einem 1 l Trockensubstanz-Anteil, also mit 12,5 % Trockensubstanz und 85,5 % Flüssigkeit, sind die Verhältnisse nach Ablauf der Zeit t bei einem konstant gehaltenen Suspensionsstrom - gezeigt mit den Linien $\notin \dot{E}$ und $\notin \dot{Ts}$ - folgendermassen: Der Produktstrom $\dot{A}'$ beträgt nun 9 l/min und das Produkt weist nun 1 l Trockensubstanz in 9 l, also nur 11 % Trockensubstanz und 89 % Flüssigkeit auf. Die Qualität des Produkts verschlechtert sich allmählich, das Produkt wurde immer dünner. Das anfangs vorhandene Verhältnis zwischen Suspensionsstrom und dem Produktstrom $\dot{A}$, welches 10/8 = 1,25 war, hat sich nach Ablauf der Zeit t zu 10/9 = 1,11 verändert. $\dot{E}/\dot{A} \neq \dot{E}/\dot{A}'$.

## Patentansprüche

1. Verfahren zum Regeln eines kontinuierlich arbeitenden Druckfilters beim Einführen eines Suspensionsstromes ($\dot{E}$) in dessen Filtrationskammer, beim Abführen eines Filtratstromes ($\dot{F}$) und eines Produktstromes ($\dot{A}$) aus der Kammer (4) und beim Unterhalten eines konstanten, tolerierten Betriebsdruckes (p) in der Kammer, wobei das Durchlassvermögen der Filtrationswände (2 und 3) der Filtrationskammer (4) mit der fortlaufenden Betriebszeit des Druckfilters allmählich abnimmt, dadurch gekennzeichnet, dass der Suspensionsstrom ($\dot{E}$) und der Produktstrom ($\dot{A}$) während des Betriebes nach Ergebnis eines Messens des Durchlassvermögens der Wände (2 und 3) reguliert werden, so dass bei jedem Feststellen einer Abnahme des Durchlassvermögens jeder der beiden Ströme um einen gleichen Koeffizienten reduziert wird, der zu der jeweils festgestellten Abnahme direkt proportional ist, wodurch ein gewünschtes und anfangs des Betriebs vorhandenes Verhältnis zwischen dem Suspensionsstrom ($\dot{E}$) und dem Produktstrom ($\dot{A}$) während des Betriebs konstant unterhalten wird und konstant bleibt ($\dot{E}/\dot{A} = \dot{E}'/\dot{A}, = \notin$).

2. Verfahren nach Anspruch 1, dadurch gekennzeichnet, dass das Durchlassvermögen der Filtrationswände (2 und 3) mittels Messens der Grösse des durch die Wände durchgelassenen Filtratstromes ($\dot{F}$) gemessen wird, dessen Abnahme, bei dem Unterhalten des konstanten Verhältnisses zwischen dem Suspensions- ($\dot{E}$)

und dem Produktstrom ($\dot{A}$) und des konstanten Betriebsdruckes die Abnahme des Durchlassvermögens der Wände (2 und 3) bedeutet.

3. Verfahren nach Anspruch 1, dadurch gekennzeichnet, dass das Durchlassvermögen der Filtrationswände (2 und 3) mittels Messens der Grösse des tolerierten Betriebsdruckes (p) in der Filtrationskammer (4) gemessen wird, dessen Zunahme in Richtung zu der oberen Toleranzgrenze des Druckes, bei dem Unterhalten des konstanten Verhältnisses zwischen dem Suspensions- ($\dot{E}$) und dem Produktstrom ($\dot{A}$), die Abnahme des Durchlassvermögens der Filtrationswände (2 und 3) bedeutet.

4. Verfahren nach Anspruch 1, dadurch gekennzeichnet, dass die Stellgrösse zum Reduzieren der beiden Ströme ($\dot{E}$ und $\dot{A}$) gemäss der gemessenen Abnahme des Durchlassvermögens der Filtrationswände sowohl vom Ergebnis eines Messens (11) des Filtratstromes ($\dot{F}$) wie auch vom Ergebnis eines Messens (19) des tolerierten Betriebsdruckes (p) abgeleitet wird.

5. Verfahren nach Anspruch 1, dadurch gekennzeichnet, dass das Einführen der Suspension und das Abführen des Produkts volumenmetrisch zwangsläufig mittels regulierbarer Dosierpumpen (7,13) erfolgt, wobei die Förderleistung der Pumpen gemäss der gemessenen Abnahme des Durchlassvermögens der Filtrationswände (2 und 3) geregelt wird.

6. Verfahren nach Anspruch 5, dadurch gekennzeichnet, dass Dosierpumpen (7, bzw. 13 bzw. 15) eingesetzt werden, die über ihre Drehzahl regulierbar sind.

7. Verfahren nach Anspruch 5, dadurch gekennzeichnet, dass als Dosierpumpen (7, 13) zweifach regulierbare Dosierpumpen eingesetzt werden, die über Verändern ihres Dosierraumes und über Verändern ihrer Drehzahl regulierbar sind und dass diese Dosierpumpen an einen drehzahlregulierbaren Antriebsmotor (8) erfolgt, wobei das konstant zu haltende Verhältnis zwischen dem Suspensions- und dem Produktstrom durch Einstellen der Dosierräume hergestellt wird.

8. Verfahren nach Anspruch 1, bei welchem in die Filtrationskammer (4) des Druckfilters zusätzlich eine Flüssigkeit zum Waschen des in der Kammer entstehenden Produkts eingeführt wird, dadurch gekennzeichnet, dass der Waschflüssigkeitsstrom ($\dot{W}$) dem Suspensionsstrom ($\dot{E}$ zugerechnet wird, so dass während des Betriebs das Verhältnis Suspensionsstrom ($\dot{E}$) plus Waschflüssigkeitsstrom ($\dot{W}$) zum Produktstrom ($\dot{A}$) konstant gehalten wird, und wobei ein konstantes Verhältnis zwischen dem Suspensionsstrom ($\dot{E}$) und dem Waschflüssigkeitsstrom ($\dot{W}$) bei dem Betrieb gehalten wird.

9. Verfahren nach Ansprüchen 8 und 5, dadurch gekennzeichnet, dass zum Einführen der Waschflüssigkeit eine zweifach regulierbare Dosierpumpe (15) benutzt wird, welche an einen Antriebsmotor (8) angekuppelt ist, auf welchen auch die zweifach regulierbaren Suspensions- (7) und Produktdosierpumpen (13) angeschlossen sind, so dass die drei Dosierpumpen (7,13 und 15) gemeinsam über eine Drehzahlregulierung (17) des gemeinsamen Antriebsmotors (8) gemeinsam und gleichsinnig reguliert werden, wobei die konstant zu haltenden Verhältnisse zwischen den Strömen durch Einstellen der Dosierräume der Pumpen hergestellt werden.

10. Verfahren nach Anspruch 5, dadurch gekennzeichnet, dass ein Regulierungsaggregat benutzt wird, bei welchem die Dosierpumpen auf eine gemeinsame Welle (16) angeschlossen sind, welche von dem Antriebsmotor (8) angetrieben ist, wobei ein Drehzahlregulierungssystem (17) des Antriebsmotors einem Stellgrössegeber (18 bzw. 20) angeschlossen ist, in welchem die Stellgrösse von der gemessenen Abnahme des Durchlassvermögens der Filtrationswände (2 und 3) abgeleitet wird.

11. Verfahren nach Anspruch 8, dadurch gekennzeichnet, dass zum Einführen und Regulieren des Suspensions-($\dot{E}$) und des Waschflüssigkeits-Stromes ($\dot{W}$) zweifach regulierbare Dosierpumpen (7 bzw. 15) eingesetzt werden, wobei für das Regulieren des Produktstromes ($\dot{A}$) eine regulierbare, volumenmetrisch kontrollierbare Drosselvorrichtung vorgesehen ist.


**Claims**

1. Method for controlling a continuously operating pressure filter while introducing a flow of suspension ($\dot{E}$) into its filtration chamber, while removing a flow of filtrate ($\dot{F}$) and a flow of product ($\dot{A}$) out of the chamber (4) and while maintaining a constant tolerated operating pressure (p) in the chamber, where the transmission capacity of the filtration walls (2 and 3) of the filtration chamber (4) gradually decreases with the continuing operating time of the pressure filter, characterized in that the flow of suspension ($\dot{E}$) and the flow of product ($\dot{A}$) are regulated during operation in accordance with the result of a measurement of the transmission capacity of the walls (2 and 3), so that every time a decrease in the transmission capacity is determined each of the two flows is reduced by the samecoefficient, which is directly proportional to the decrease determined at that time, whereby a desired ratio, present at the beginning of the operation, between the flow of suspension ($\dot{E}$) and the flow of product ($\dot{A}$) is maintained constant during the operation and remains constant ($\dot{E}/\dot{A} = \dot{E},/\dot{A}, = \not{c}$).

2. Method according to Claim 1, characterized in that the transmission capacity of the filtration walls (2 and 3) is measured by measuring the magnitude of the flow of filtrate ($\dot{F}$) through thewalls, the decrease of which while maintaining the constant ratio between the flow of suspension ($\dot{E}$) and the flow of product ($\dot{A}$) and the constant operating pressure, signifies the decrease in the transmission capacity of the walls (2 and 3).

3. Method according to Claim 1, characterized in that the transmission capacity of the filtration walls (2 and 3) is measured by measuring the magnitude of the tolerated operating pressure (p) in the filtration chamber (4), the increase in which towards the upper limiting tolerance value of the pressure, while maintaining the constant ratio between the flow of suspension ($\dot{E}$) and the flow of the product ($\dot{A}$), signifies the decrease in the transmission capacity of the filtration walls (2 and 3).

4. Method according to Claim 1, characterized in that the correcting variable for reducing the two flows ($\dot{E}$ and $\dot{A}$) in accordance with the measured decrease in the transmission capacity of the filtration walls is derived both from the result of a measurement (11) of the flow of filtrate ($\dot{F}$) and also from the result of a measurement (19) of the tolerated operating pressure (p)

5. Method according to Claim 1, characterized in that the introduction of the suspension and the removal of the product takes place positively volumetrically by means of controllable metering pumps (7,13), where the output capacity of the pumps is controlled in accordance with the measured decrease in the transmission capacity of the filtration walls (2 and 3).

6. Method according to Claim 5, characterized in that metering pumps (7,13) are used, which are controllable as regards their rotational speed.

7. Method according to Claim 5, characterized in that dually controllable metering pumps are used as metering pumps (7,13) which are controllable by changing their metering chamber and by changing their rotational speed and that these metering pumps are connected to a drive motor (8) having a controllable rotational speed, whereby the ratio between the flow of suspension and the flow of product, which is to be kept constant, is established by adjusting the metering chambers.

8. Method according to Claim 1, in which a liquid to wash the product formed in the chamber is additionally introduced into the filtration chamber (4) of the pressure filter, characterized in that the flow of wash liquid ($\dot{W}$) is added to the suspension flow ($\dot{E}$), so that during the operation the ratio of flow of suspension ($\dot{E}$) plus flow of wash liquid ($\dot{W}$) to the flow of product ($\dot{A}$) is kept constant, and whereby a constant ratio between the flow of suspension ($\dot{E}$) and the flow of wash liquid ($\dot{W}$) is maintained during the operation.

9. Method according to Claims 8 and 5, characterized in that for the introduction of the wash liquid a dually controllable metering pump (15) is used, which is connected to a drive motor (8), to which also the dually controllable suspension metering pump (7) and product metering pump (13) are connected, so that the three metering pumps (7,13 and 15) are regulated jointly and in the same direction by a rotational speed control (17) of the common drive motor (8), whereby the ratios, which are to be kept constant, between the flows, are established by adjusting the metering chambers of the pumps.

10. Method according to Claim 5, <u>characterized in that</u> a control assembly is used, in which the metering pumps are connected to a common shaft (16), which is driven by the drive motor (8), whereby a rotational speed control system (17) of the drive motor is connected to a correcting variable transmitter (18 resp. 20) in which the correcting variable is derived from the measured decrease in the transmission capacity of the filtration walls (2 and 3).

11. Method according to Claim 8, <u>characterized in that</u> for the introduction and control of the flow of suspension (Ė) and of the flow of wash liquid (Ẇ) duallycontrollable metering pumps (7 resp. 15) are used, where for the regulation fo the flow of product (Ȧ) a controllable volumetrically controllable throttling means is provided.

**Revendications**

1. Procédé de régulation d'un filtre sous pression à action continue au moment de l'introduction d'un courant de suspension (Ė) dans sa chambre de filtration et de l'évacuation d'un courant de filtrat (Ḟ) et d'un courant de produit (A) hors de la chambre (4) et en entretenant une pression de fonctionnement (p) constante et tolérancée dans la chambre, cependant que la capacité de passage des parois de filtration (2 et 3) de la chambre (4) diminue au fur et à mesure du temps de fonctionnement du filtre sous pression, caractérisé en ce que le courant de suspension (Ė) et le courant de produit (Ȧ) sont régulés pendant le fonctionnement suivant le résultat d'une mesure de la capacité de passage des parois (2 et 3), de sorte qu'à chaque constatation d'une baisse de la capacité de passage, chacun des deux courants est réduit d'un même coefficient, qui est directement proportionnel à la réduction chaque fois constatée,de sorte qu'un rapport - voulu et existant au commencement du fonctionnement - entre le courant de suspension (Ė) et le courant de produit (Ȧ) soit entretenu constamment pendant le fonctionnement et reste constant (Ė/Ȧ = Ė'/Ȧ' = ¢).

2. Procédé suivant la revendication 1, caractérisé en ce que la capacité de passage des parois de filtration (2 et 3) est déterminée au moyen de la mesure de la grandeur du courant de filtrat (Ḟ) passé par les parois et dont la réduction, étant donné l'entretien du rapport constant entre le courant de supsension (Ė) et le courant du produit (Ȧ) ainsi que de la pression constante de fonctionnement définit la réduction de la capacité de passage des parois (2 et 3).

3. Procédé suivant la revendication 1, caractérisé en ce que la capacité de passage des parois de filtration (2 et 3) est mesurée au moyen de la mesure de la grandeur de la pression de fonctionnement (p) tolérancée qui règne dans la chambre de filtration (4) et dont l'augmentation vers la limite supérieure de tolérance de la pression, étant donné l'entretien du rapport constant entre le courant de suspension (Ė) et le courant de produit (Ȧ), définit la réduction de la capacité de passage des parois de filtration (2 et 3).

4. Procédé suivant la revendication 1, caractérisé en ce que la grandeur de réglage pour la réduction des deux courants (Ė et Ȧ) suivant la réduction mesurée de la capacité de passage des parois de filtration découle aussi bien du résultat d'une mesure (11) du courant de filtrat (Ḟ) que du résultat d'une mesure (19) de la pression tolérancée du fonctionnement (p).

5. Procédé suivant la revendication 1, caractérisé en ce que l'introduction de la suspension et l'évacuation du produit se font volumétriquement nécessairement au moyen de pompes doseuses réglables (7, 13), le débit des pompes étant réglé suivant la réduction mesurée de la capacité de passage des parois de filtration (2 et 3).

6. Procédé suivant la revendication 5, caractérisé en ce que des pompes doseuses (7, 13), dont la vitesse est réglable, sont mises en oeuvre.

7. Procédé suivant la revendication 5, caractérisé en ce que, comme pompes doseuses (7, 13), on met en oeuvre des pompes deux fois réglables, par le changement de leur chambre de dosage et par le changement de leur vitesse et que cespompes doseuses sont accouplées à un moteur d'entrainement (8), dont la vitesse est réglable, le rapport entre le courant de suspension et le courant de produit, qui doit etre maintenu constant, étant établi par ajustement des chambres de dosage.

8. Procédé suivant la revendication 1, suivant lequel on introduit en plus, dans la chambre de filtration (4) du filtre sous pression, un liquide pour le lavage du produit obtenu dans la chambre, caractérisé en ce que le courant du liquide de lavage (Ẇ) s'ajoute au courant de suspension (Ė), de sorte que, pendant le fonctionnement, le rapport entre d'une part le courant de suspension (Ė) plus le courant du liquide de lavage (Ẇ) et d'autre part le courant de produit (Ȧ) soit maintenu constant, cependant qu'un rapport constant est maintenu entre le courant de suspension (Ė) et le courant du liquide de lavage (Ẇ) pendant le fonctionnement.

9. Procédé suivant les revendications 8 et 5, caractérisé en ce que, pour l'introduction du liquide de lavage, on utilise une pompe doseuse deux fois réglable (15), qui est accouplée à un moteur d'entrainement (8), auquel sont accouplées aussi les pompes doseuses de suspension (7) et de produit (13) , de sorte que les trois pompes doseuses (7, 13 et 15) soient réglées ensemble et dans le même sens par un réglage de vitesse (17) du moteur d'entrainement commun (8), cependant que les rapports entre les courants devant être maintenus constants sont établis par ajustement des chambres de dosage des pompes.

10. Procédé suivant la revendication 5, caractérisé en ce qu'on utilise un groupe de réglage, avec lequel les pompes doseuses sont raccordées à un arbre commun (16) entraîné par le moteur (8), cependant qu'un système de régulation de vitesse (17) du moteur d'entrainement est raccordé à un capteur de grandeur de réglage (18, 20), dans lequel la grandeur de réglage découle de la réduction mesurée de la capacité de passage des parois de filtration (2 et 3).

11. Procédé suivant la revendication 8, caractérisé en ce que, pour l'introduction et le réglage du courant de suspension ($\dot{E}$) et du courant de liquide de lavage ($\dot{W}$), on met en oeuvre des pompes doseuses (7, 15) deux fois réglables, cependant que, pour le réglage du courant de produit ($\dot{A}$), on prévoit un dispositif d'étranglement réglable et dont le volume peut être contrôlé.

FIG.1

FIG.2

FIG.3

FIG.4